# EUROPÄISCHE PATENTSCHRIFT

(11) **EP 1 473 199 B1**
(45) Veröffentlichungstag und Bekanntmachung des Hinweises auf die Patenterteilung: **31.12.2008**
(21) Anmeldenummer: 04009056.5
(22) Anmeldetag: 16.04.2004
(51) Int. Cl.: B60R 21/06

(54) **Trennvorrichtung für einen Fahrzeuginnenraum**
Partition device for vehicle interior
Dispositif de cloisonnement pour l'intérieur d'un véhicule

(30) Priorität: 30.04.2003 DE 10320527
(43) Veröffentlichungstag der Anmeldung: 03.11.2004
(73) Patentinhaber: BOS GmbH & Co. KG, 73760 Ostfildern (DE)
(72) Erfinder: Schlecht, Werner P., 71665 Vaihingen/Enz-Aurich (DE)
(74) Vertreter: Patentanwälte Ruff, Wilhelm, Beier, Dauster & Partner

(56) Entgegenhaltungen:
- EP-A- 1 176 060
- WO-A-99/58370
- DE-A1- 3 800 425
- DE-A1- 4 128 555
- DE-A1- 10 039 789
- FR-A- 2 645 479

## Beschreibung

Die Erfindung betrifft einen Fahrzeuginnenraum mit einer Trennvorrichtung mit wenigstens einem formstabilen Flächengebilde, das in einer Schutzposition aufrecht positioniert ist.

Eine derartige Trennvorrichtung ist allgemein bekannt. Die bekannte Trennvorrichtung weist einen formstabilen Rahmen auf, in dem ein Trennnetz aufgespannt ist. Der Rahmen zusammen mit dem aufgespannten Trennnetz stellt ein formstabiles Flächengebilde dar. Der Rahmen mit Trennnetz ist schwenkbeweglich in einem Dachbereich eines Fahrzeuginnenraumes zwischen einer an dem Dachbereich anliegenden Ruheposition und einer bis etwa auf Höhe einer Fahrzeugbordkante nach unten verschwenkten Schutzposition beweglich gelagert. In der Schutzposition ist der Rahmen mit Trennnetz aufrecht, d.h. in einem Winkel zwischen 0° und 45° relativ zu einer Vertikalen, positioniert und stützt sich mit seiner Unterkante im Bereich einer Rückenlehne einer Fahrzeugsitzanordnung ab.

Aus der DE 100 39 789 A1 ist ein Fahrzeuginnenraum bekannt, bei dem ein Sitzteil einer Fondsitzbank mit einer integrierten Trennwand versehen ist. Der Sitzteil kann in eine etwa vertikale Stellung verschwenkt werden, in der dann die Trennwand nach oben zu einem Dachhimmel ausgefahren und dort arretiert werden kann.

Die EP 1 176 060 A2 offenbart einen Fahrzeuginnenraum, der einen Fahrgastraum und einen heckseitigen Laderaum umfasst. Eine Fondsitzbank innerhalb des Fahrzeuginnenraumes ist versenkbar, um den Laderaum nach vorne zu vergrößern. Der Laderaum ist durch eine formstabile Trennwand von dem Fahrgastraum abtrennbar, die in vertikaler Ausrichtung in Führungsschienen am Laderaumboden verschiebbar gelagert ist.

Aufgabe der Erfindung ist es, eine Trennvorrichtung der eingangs genannten Art zu schaffen, die eine verbesserte Trennfunktion für den Fahrzeuginnenraum bietet.

Die der Erfindung zugrundeliegende Aufgabe wird dadurch gelöst, dass das Flächengebilde zwischen einer mit einem Fahrzeugboden bodenbündig angeordneten Abdeckposition und wenigstens einer aufrechten Schutzposition beweglich gelagert ist, und dass das Flächengebilde über eine Zwangsführungseinrichtung relativ zu dem Fahrzeugboden derart beweglich geführt ist, dass das Flächengebilde in wenigstens zwei in Fahrzeuglängsrichtung relativ zueinander beabstandete Schutzpositionen überführbar ist. Durch diese Lösung werden die Einsatzmöglichkeiten für die Trennvorrichtung gegenüber dem Stand der Technik erheblich erweitert. Zum einen bildet das Flächengebilde in der bodenbündigen Abdeckposition einen Teil des Fahrzeugbodens. Insbesondere kann das Flächengebilde in dieser Position auch eine Vertiefung in einem Laderaumboden überdecken, d.h. es weist eine Abdeckfunktion auf. In der aufrechten Schutzposition kann es als Trennwand dienen. Durch die Verlagerbarkeit des Flächengebildes in wenigstens zwei unterschiedliche Schutzpositionen ist eine variable Trennung des Fahrzeuginnenraumes ermöglicht. Das Flächengebilde kann als Trennwand in unterschiedlichen Bereichen des Fahrzeuginnenraumes aufgebaut werden, so dass eine variable Segmentierung des Fahrzeuginnenraumes erzielbar ist. Das Flächengebilde kann ein- oder mehrteilig gestaltet sein. Insbesondere kann das Flächengebilde auch mit wenigstens einem transparenten Scheibenelement gemäß den zuvor beschriebenen Ausführungen versehen sein.

Die erfindungsgemäße Lösung eignet sich sowohl für den Einsatz bei Personenkraftwagen, als auch bei Nutzkraftwagen.

In Ausgestaltung der Erfindung weist die Zwangsführungseinrichtung wenigstens eine kombinierte Linearführungs- und Schwenkkinematik auf, die einerseits fahrzeugseitig und andererseits am Flächengebilde angreift. Hierdurch wird eine stabile mechanische Lösung erzielt, um das Flächengebilde bei seinen Bewegungen zwischen der Abdeckposition und der Schutzposition definiert zu führen und vorzugsweise auch in den jeweiligen Endstellungen zu sichern.

In weiterer Ausgestaltung der Erfindung weist die Linearführungs- und Schwenkkinematik wenigstens einen Stützarm auf, der in wenigstens einer aufrechten Schutzposition des Flächengebildes in eine die Schutzposition sichernde Übertotpunktlage überführt ist. Dadurch wird eine besonders einfache, robuste und funktionssichere mechanische Stützung des Flächengebildes erzielt.

In weiterer Ausgestaltung der Erfindung ist das formstabile Flächengebilde in seiner Ruheposition einer Vertiefung des Fahrzeugbodens zugeordnet, und es ist ein benachbartes, bodenseitiges Abdeckelement vorgesehen, das bei in eine aufgestellte Schutzposition überführtem Flächengebilde in eine die Vertiefung abdeckende Schließposition überführbar ist. Dadurch ist gewährleistet, dass auch bei aufrechtstehendem Flächengebilde die Vertiefung in dem Fahrzeugboden abgedeckt ist.

Das Flächengebilde kann in seiner Ruheposition entweder selbst zur Abdeckung der Vertiefung dienen oder es ist unterhalb eines zusätzlichen Abdeckelementes angeordnet, das die Vertiefung einschließlich des in der Vertiefung versenkten Flächengebildes überdeckt.

In weiterer Ausgestaltung der Erfindung ist das Abdeckelement zwischen einer ein weiteres Abdeckelement überlagernden Dopplungsposition und einer fluchtend horizontal an das Abdeckelement anschließenden Deckposition beweglich gelagert. Vorzugsweise ist das Abdeckelement schwenkbeweglich, insbesondere mittels einer Scharnieranordnung, an dem weiteren Abdeckelement angeordnet. Alternativ kann das Abdeckelement auch linear verschiebbar auf oder unter dem weiteren Abdeckelement angeordnet sein.

In weiterer Ausgestaltung der Erfindung weisen die beiden Abdeckelemente in der Dopplungsposition gemeinsam etwa die Dicke des formstabilen Flächengebildes auf. Diese Ausführungsform ist insbesondere vorteilhaft, falls das Flächengebilde zur Abdeckung der Vertiefung dient und falls in dem Flächengebilde, das vorzugsweise als Plattenanordnung gestaltet ist, wenigstens ein transparentes Scheibenelement integriert ist. Denn durch die Integration des Scheibenelementes weist das Flächengebilde zwangsläufig eine erheblich größere Dicke auf als diese für die benachbarten Abdeckelemente zur Abdeckung entsprechender Vertiefungen des Fahrzeugbodens benötigt wird. Durch die Dickenanpassung der Abdeckelemente ist auch in der Ruheposition des formstabilen Flächengebildes ein ebener Fahrzeugboden erzielbar.

In weiterer Ausgestaltung der Erfindung sind in Fahrzeuglängsrichtung gesehen mehrere Vertiefungen in dem Fahrzeugboden für die Aufnahme wenigstens einer zusammenklappbaren Sitzanordnung vorgesehen, und das wenigstens eine formstabile Flächengebilde ist mittels bodenseitiger Führungsanordnungen in Fahrzeuglängsrichtung über wenigstens eine Vertiefung oder wenigstens eine zusammengeklappte Sitzanordnung hinweg verlagerbar geführt. Dadurch kann der Fahrzeuginnenraum wahlweise als Laderaum oder als Sitzbereich für Fahrzeuginsassen variiert werden. Das Flächengebilde kann als Trennwand äußerst variabel in Fahrzeuglängsrichtung verschoben werden, ohne dass die zwangsführende Verbindung mit dem Fahrzeugboden im Bereich versenkt angeordneter Sitzanordnungen aufgegeben werden muss. Diese Ausgestaltung eignet sich insbesondere für Großraumlimousinen oder auch für Nutzfahrzeuge zur Personen- und Ladegutbeförderung, insbesondere auch für Omnibusse.

In weiterer Ausgestaltung der Erfindung ist dem Flächengebilde wenigstens ein transparentes Scheibenelement zugeordnet, das translatorisch parallel zu dem Flächengebilde beweglich gelagert ist, und das in einer Schutzposition das Flächengebilde in Fahrzeughochrichtung verlängert. Vorzugsweise weist das Flächengebilde einen formstabilen Rahmen auf, in dem das ebenfalls formstabile Scheibenelement translatorisch beweglich gelagert ist. Der formstabile Rahmen kann Teil einer formstabilen Platten- oder Kastenanordnung sein. Alternativ ist es auch möglich, innerhalb des formstabilen Rahmens ein Trennnetz aufzuspannen, wie es aus dem Stand der Technik bekannt ist. Vorzugsweise erstreckt sich das Flächengebilde in seiner aufrechten Schutzposition von einem Fahrzeugboden aus bis etwa auf Höhe einer Fahrzeugbordkante. Das wenigstens eine Scheibenelement erstreckt sich in seiner ausgezogenen Schutzposition vorzugsweise bis zu einem Dachbereich des Fahrzeuginnenraumes. Durch die erfindungsgemäße Lösung ist über die gesamte Höhe des Fahrzeuginnenraumes eine stabile Trennwand erzielbar. Die Transparenz des wenigstens einen Scheibenelementes ermöglicht in der Schutzposition des Scheibenelementes einen einwandfreien Durchblick, so dass die Sicht insbesondere für einen Fahrer des Kraftfahrzeugs durch das in seine Schutzposition überführte Scheibenelement nicht beeinträchtigt ist. Die erfindungsgemäße Lösung eignet sich insbesondere für Kraftfahrzeuge, mit denen sowohl Personen als auch Ladegut transportiert wird.

In weiterer Ausgestaltung der Erfindung ist das Flächengebilde analog einer Teilung einer Rückenlehnenanordnung geteilt gestaltet, wobei die wenigstens zwei Teile unabhängig voneinander beweglich angeordnet sind, und jedem Teil ist wenigstens ein Scheibenelement zugeordnet. Dadurch wird die Variabilität einer Laderaumvergrößerung erhalten, auch wenn das Flächengebilde unmittelbar hinter oder im Bereich einer Rückenlehnenanordnung positioniert ist.

In weiterer Ausgestaltung der Erfindung ist das Flächengebilde als Plattenanordnung gestaltet, in der das wenigstens eine Scheibenelement linear verschiebbar integriert ist. Das wenigstens eine Scheibenelement ist somit in seiner Ruheposition in der Plattenanordnung unsichtbar versenkt angeordnet. Sowohl die Plattenanordnung als auch das Scheibenelement sind derart formstabil gestaltet, dass ein sicherer Rückhalt von Ladegut auch bei durch einen Fahrzeugaufprall bewirkten Verzögerungen oder Beschleunigungen des Ladegutes erzielbar ist.

In weiterer Ausgestaltung der Erfindung ist das wenigstens eine Scheibenelement in einer Schlitzführung der Plattenanordnung linear verschiebbar geführt, und eine in der Funktionsposition nach oben offene Seite der Schlitzführung ist durch einen beweglichen Deckel verschließbar. Dadurch wird das Scheibenelement optisch unsichtbar in seiner versenkten Ruheposition angeordnet. Zudem ist das Scheibenelement in seiner Ruheposition verschmutzungssicher gehalten.

Weitere Vorteile und Merkmale der Erfindung ergeben sich aus den Ansprüche. Nachfolgend sind bevorzugte Ausführungsbeispiele der Erfindung beschrieben und anhand der Zeichnungen dargestellt.
- Fig. 1: zeigt schematisch in einer teilweise geschnittenen Seitenansicht eine Ausführungsform eines erfindungsgemäßen Fahrzeuginnenraumes eines Kraftfahrzeugs mit einer Trennvorrichtung,
- Fig. 2: die Darstellung nach Fig. 1, wobei die Trennvorrichtung sich in einer gegenüber der Position nach Fig. 1 veränderten Zwischenstellung befindet,
- Fig. 3: die Trennvorrichtung nach den Fig. 1 und 2 in einer ersten Schutzposition,
- Fig. 4: die Trennvorrichtung nach Fig. 3 in einer zweiten Schutzposition,
- Fig. 5: in perspektivischer Darstellung einen Teilbereich einer weiteren Ausführungsform eines mit einer Trennvorrichtung versehenen Fahrzeuginnenraumes,
- Fig. 6: den Fahrzeuginnenraum nach Fig. 5 in einer Schutzposition der Trennvorrichtung,
- Fig. 7: den Fahrzeuginnenraum nach den Fig. 5 und 6 in einer weiteren Schutzposition der Trennvorrichtung und
- Fig. 8: einen Ausschnitt VIII des Fahrzeuginnenraumes gemäß Fig. 7.

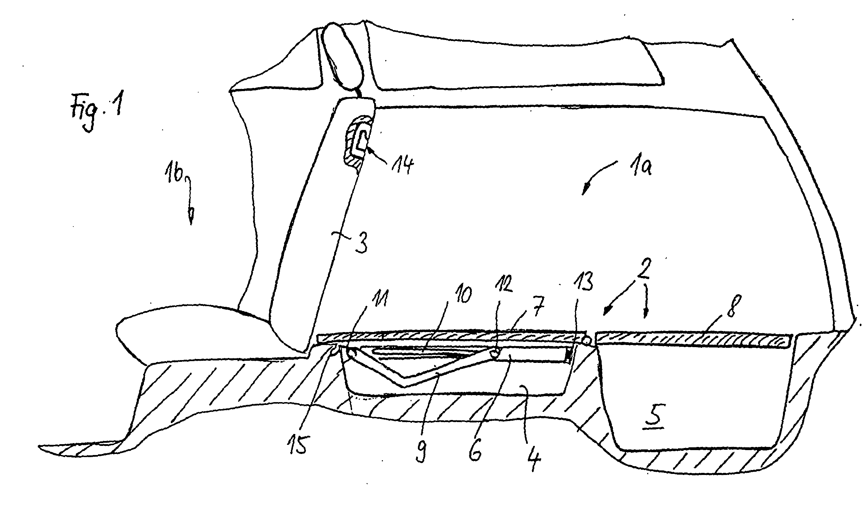

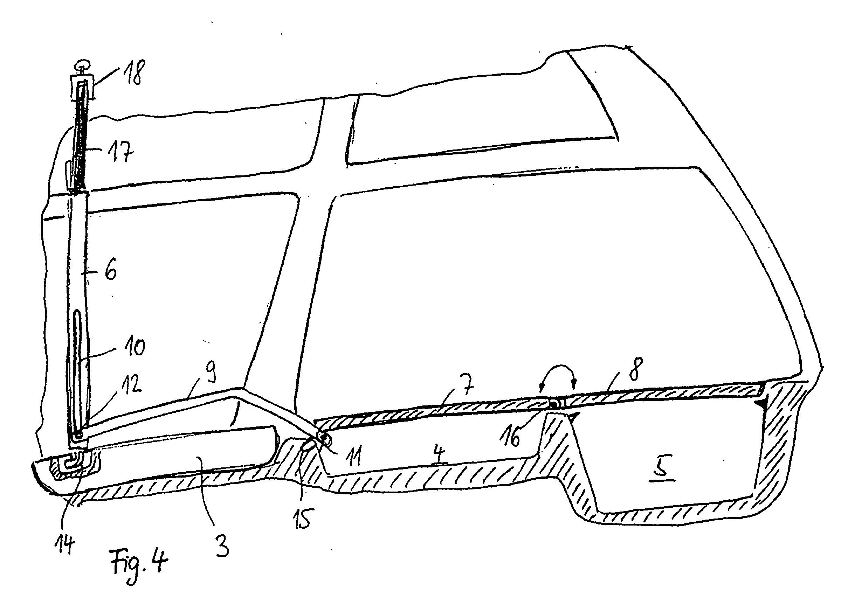

Ein Kraftfahrzeug gemäß den Fig. 1 bis 4 stellt einen Kombi-Personenkraftwagen oder eine Großraumlimousine dar, die neben einem Fahrzeuginsassenbereich 1b einen Laderaum 1a innerhalb ihres Fahrzeuginnenraumes besitzen. Der Laderaum 1a ist - in normaler Fahrtrichtung des Kraftfahrzeugs gesehen - hinter einer Rückenlehnenanordnung 3 einer Fondsitzbank positioniert. Die Rückenlehnenanordnung 3 der Fondsitzbank ist nach vorne umkippbar, wodurch der Laderaum 1a nach vorne vergrößerbar ist (Fig. 4). In einem Fahrzeugboden 2 des Laderaumes 1a sind - wie anhand der Fig. 1 bis 4 erkennbar ist - mehrere Vertiefungen 4, 5 vorgesehen, die nach oben durch lösbare Abdeckelemente 7, 8 verschlossen sind.

Eine - in normaler Fahrtrichtung gesehen - vordere Vertiefung 4 erstreckt sich über im wesentlichen die gesamte Breite des Laderaumes 1a und ist durch das sich ebenfalls über die Breite des Laderaumes 1a erstreckende Abdeckelement 7 verschlossen. Das Abdeckelement 7 ist mittels einer Scharnieranordnung 16 schwenkbeweglich an dem rückseitigen Abdeckelement 8 gelagert, wobei eine Scharnierachse der Scharnieranordnung 16 sich horizontal und in Fahrzeugquerrichtung erstreckt. Beim dargestellten Ausführungsbeispiel erstreckt sich das Abdeckelement 8 über die gesamte Breite des Laderaumes 1a. Die beiden Abdeckelemente 7 und 8 bilden in der in Fig. 1 dargestellten Schließposition für die Vertiefungen 4, 5 nahezu die gesamte Bodenfläche des Fahrzeugbodens 2 des Laderaumes 1a.

In der Vertiefung 4 ist unterhalb des Abdeckelementes 7 eine Trennvorrichtung in ihrer versenkten Ruheposition gelagert. Die Trennvorrichtung weist ein formstabiles Flächengebilde in Form einer Plattenanordnung 6 auf. Die Plattenanordnung 6 ist rahmen- oder kastenartig gestaltet und ist in ihrem Inneren mit einem Hohlraum versehen, in dem ein transparentes Scheibenelement 17 translatorisch verschiebbar integriert ist. Der Hohlraum innerhalb der Plattenanordnung 6 ist zu einem Stirnende hin offen, durch das das transparente Scheibenelement 17, das ebenfalls formstabil gestaltet ist, nach außen ausgezogen werden kann, um die durch die Plattenanordnung 6 gebildete Trennwand parallel und fluchtend zu verlängern. Die offene Stirnseite des Hohlraumes ist durch einen Deckel 13 verschließbar, der schwenkbeweglich an der Plattenanordnung 6 gehalten ist.

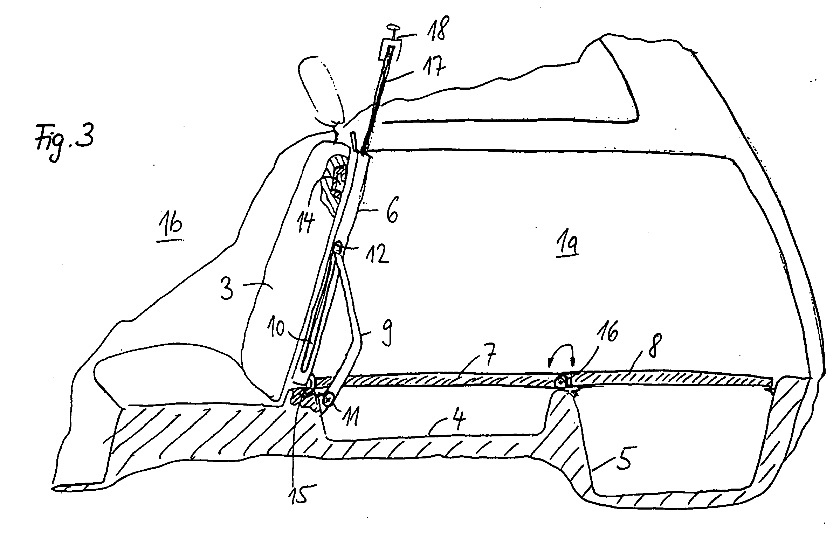

Die Plattenanordnung 6 erstreckt sich über nahezu die gesamte Breite des Laderaumes 1a und weist eine Länge auf, die in einer aufrechten Schutzposition (Fig. 3 und 4) in Fahrzeughochrichtung ausgerichtet ist und sich etwa von dem Fahrzeugboden 2 bis zu einer Fahrzeugbordkante erstreckt. Die Scheibenanordnung 17 ist so weit nach oben ausziehbar, dass die Scheibenanordnung in der aufrechten Schutzposition der Plattenanordnung 6 sich zwischen der Fahrzeugbordkante und einem Dachbereich des Fahrzeuginnenraumes erstreckt. Beim dargestellten Ausführungsbeispiel ist eine obere Stirnkante der Scheibenanordnung 17 mit einem Auszugprofil 18 versehen, das Halteelemente zur dachseitigen Fixierung der Scheibenanordnung 17 aufweist.

Beim dargestellten Ausführungsbeispiel ist die Scheibenanordnung durch ein einzelnes, transparentes Scheibenelement aus einem nicht splitternden Kunststoff gebildet. Vorzugsweise ist das Scheibenelement aus Polyacrylglas hergestellt. Die Scheibenanordnung 17 ist innerhalb der Plattenanordnung 6 translatorisch beweglich gelagert. Hierzu sind vorzugsweise Gleit- oder Wälzlagerführungen im Bereich des Hohlraumes der Plattenanordnung 6 vorgesehen.

Das Abdeckprofil 18 der Scheibenanordnung 17, das auf der oberen Stirnkante der Scheibenanordnung 17 befestigt ist, ist beim dargestellten Ausführungsbeispiel mit Halteelementen in Form von Einhängehaken versehen, die mit dachseitigen Halteaufnahmen zusammenwirken und eine Fixierung der Scheibenanordnung 6 in der aufrechten Schutzposition der Plattenanordnung 6 und in ausgezogener Position der Scheibenanordnung 17 erzielen.

Um eine definierte Führung der Plattenanordnung 6 zwischen den aufrechten Schutzpositionen gemäß den Fig. 3 und 4 und der versenkten Ruheposition gemäß Fig. 1 zu erzielen, ist eine Zwangsführungseinrichtung, vorliegend in Form einer Linearführungs-/Schwenkkinematik 9, 10, vorgesehen, die beim dargestellten Ausführungsbeispiel von Hand bedient werden muss. Die Linearführung-/Schwenkkinematik weist beim dargestellten Ausführungsbeispiel beidseitig der Plattenanordnung 6 jeweils einen gekröpften Stützarm 9 auf, wobei die Stützarme 9 im Bereich des Fahrzeugbodens mittels einer gemeinsamen Schwenklagerung 11 fahrzeugfest schwenkbeweglich angelenkt sind. Um eine synchronisierte Bewegung beider Stützarme 9 zu erzielen, sind die beiden Stützarme 9 in nicht näher dargestellter Weise über eine in Fahrzeugquerrichtung verlaufende Verbindungswelle koaxial zu der Schwenkachse der Schwenklagerung 11 drehschlüssig miteinander verbunden. Jeder Stützarm 9 greift in eine Linearführung 10 der Plattenanordnung 6 ein, die als Schlitzführung an jeweils einer Seitenkante der Plattenanordnung 6 ausgeführt ist. Ein entsprechender Gelenkpunkt 12 jedes Stützarmes 9 ist mittels eines Gleitsteines oder Kulissenzapfens in der Schlitzführung 10 verschiebbar gelagert. Gleichzeitig ist eine Schwenkbeweglichkeit um eine zu der Schwenkachse der Schwenklagerung 11 parallele Schwenkachse des Gelenkpunktes 12 gegeben. Die Schlitzführung 10 auf jeder Seite der Plattenanordnung 6 verläuft parallel zu der Auszugoder Einschubrichtung der Scheibenanordnung 17.

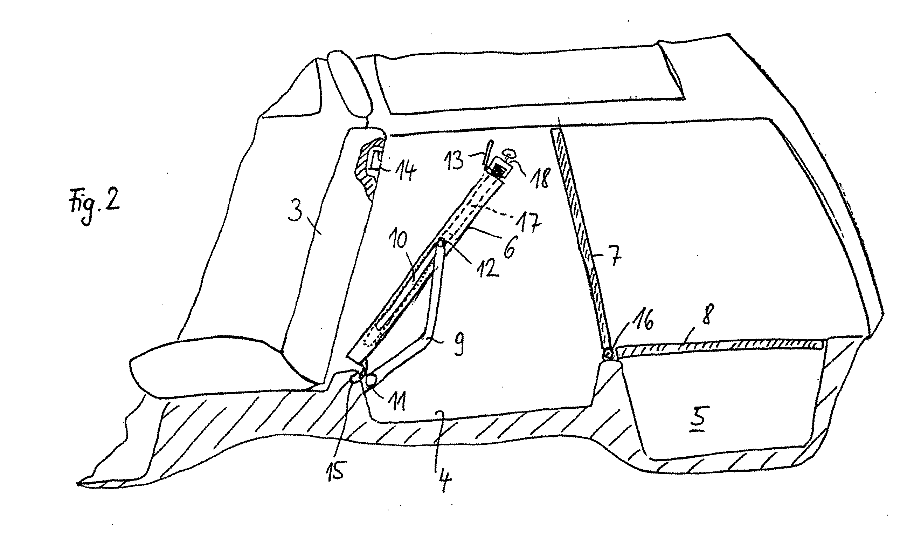

Um die Plattenanordnung 6 aus ihrer Ruheposition gemäß Fig. 1 in eine aufrechte Schutzposition gemäß Fig. 3 zu überführen, ist der Plattenanordnung 6 zusätzlich eine Schwenkhilfe 15 zugeordnet, die durch eine Schwenkhakenanordnung im Bereich des unteren Endes der Plattenanordnung 6 einerseits und durch korrespondierende Schwenkaufnahmen 15 im Fahrzeugboden andererseits gebildet sind. Beim Herausschwenken der Plattenanordnung 6 aus der Ruheposition innerhalb der Vertiefung 4 geraten die als gekrümmte Steckelemente dienenden Schwenkhaken vor die als gekrümmte Steckaufnahmen gestalteten, offenen Schwenkaufnahmen 15 und gleiten in diese hinein. Die Schwenkaufnahmen 15 und die zugeordneten Schwenkhaken sind derart ausgeführt, dass diese eine Schwenkachse bzw. eine Schwenkstütze für die Plattenanordnung 6 bilden. Um diese Schwenkachse wird die Plattenanordnung 6 daher aus ihrer Zwischenlage gemäß Fig. 2 in die aufrechte Schutzposition verschwenkt. Anschließend wird die Scheibenanordnung 17 nach oben ausgezogen und in nicht näher dargestellter Weise in dachseitigen Halterungen festgelegt. Die Lage der dachseitigen Halterungen wie auch die Lage der Schwenkaufnahmen 15 ist derart gewählt, dass die Plattenanordnung 6 in ihrer aufrechten Schutzposition gemäß Fig. 3 unmittelbar hinter der Rückenlehnenanordnung 3 positioniert ist.

Um das Herausbewegen der Plattenanordnung 6 aus der Vertiefung 4 zu ermöglichen, wurde das Abdeckelement 7 nach oben geschwenkt, so dass die Bewegung der Plattenanordnung 6 freigegeben wurde. Nachdem die Plattenanordnung 6 ihre Schutzposition gemäß Fig. 3 eingenommen hat, kann in einfacher Weise das Abdeckelement 7 wieder zurückgeschwenkt werden, so dass die Vertiefung 4 wieder verschlossen ist.

Um auch bei nach vorne umgeklappter Rückenlehnenanordnung 3 eine Trennwand in entsprechend erweitertem Laderaum aufbauen zu können, sind in der Rückenlehnenanordnung 3 Schwenkaufnahmen 14 vorgesehen, die analog zu den Schwenkaufnahmen 15 des Fahrzeugbodens ausgeführt sind. Die Plattenanordnung 6 kann in einfacher Weise aus der Schutzposition nach Fig. 3 herausbewegt werden, indem sie nach oben gezogen wird, wodurch die Schwenkhaken zwangsläufig aus den Schwenkaufnahmen 15 herausgezogen werden. Die Stützarme 9 sind derart ausgeführt, dass eine weitere Schwenkbewegung in gleicher Schwenkrichtung ohne weiteres möglich ist. Die Plattenanordnung 6 wird daher in Fahrtrichtung nach vorne verlagert, bis die Schwenkhaken in die Schwenkaufnahmen 14 im Bereich der umgeklappten Rückenlehne 3 eingreifen. Nun werden die Stützarme 9 im Bereich ihrer Gelenkpunkte 12 in der jeweiligen Schlitzführung 10 nach unten gedrückt bis zur unteren Endlage der Schlitzführungen 10. In dieser Position nehmen die Stützarme 9 aufgrund ihrer Kröpfung eine Übertotpunktlage ein, in der sie eine stabile Stützung für die Plattenanordnung 6 bilden. Eine zusätzliche Stützung oder Halterung ist daher nicht unbedingt erforderlich. Ergänzend kann dennoch die Scheibenanordnung 17 mittels des Halteprofiles 18 in dachseitigen Halterungen fixiert werden, die ergänzend zu den weiter hinten liegenden dachseitigen Halterungen fahrzeugseitig angebracht sind.

In entsprechend umgekehrter Bewegungsreihenfolge kann die Plattenanordnung 6 mit der integrierten Scheibenanordnung 17 wieder in die Ruheposition gemäß Fig. 1 überführt werden.

Beim dargestellten Ausführungsbeispiel werden die entsprechenden Bewegungen der Plattenanordnung 6 oder der Scheibenanordnung 17 manuell veranlasst. Bei einem nicht dargestellten Ausführungsbeispiel der Erfindung sind der Zwangsführungseinrichtung zur Bewegung der Plattenanordnung wie auch der Scheibenanordnung jeweils Antriebsmittel zugeordnet, um wenigstens in einer Bewegungsrichtung die entsprechenden Bewegungen durchführen oder zumindest unterstützen zu können. Geeignete Antriebsmittel sind sowohl mechanische Federspeicher oder Federmotoren als auch elektrische, pneumatische oder hydraulische Antriebe.

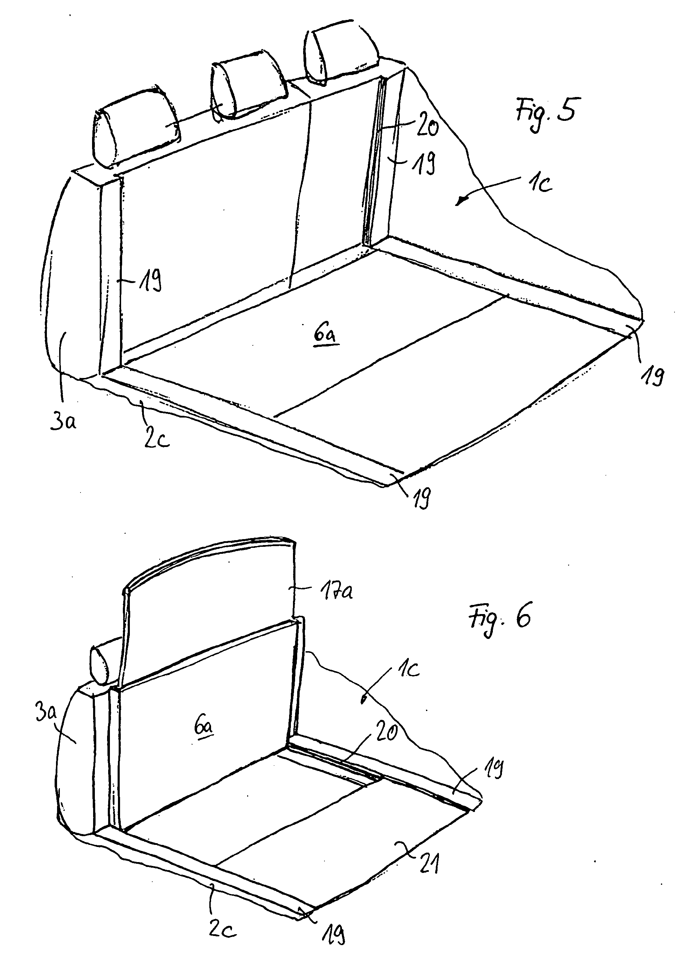

Bei der Ausführungsform nach den Fig. 5 bis 8 weist ein Fahrzeuginnenraum eines Kraftfahrzeugs im Bereich eines Fahrzeugbodens 2c wenigstens eine Vertiefung auf, in die eine Sitzanordnung oder wenigstens eine Rückenlehnenanordnung 3a einer Sitzanordnung versenkt werden kann. Der Fahrzeugboden ist mit in Fahrzeuglängsrichtung verlaufenden, seitlichen Führungsschienen 19 versehen, die fahrzeugbodenseitig verankert sind. Eine Rückseite jeder Rückenlehnenanordnung 3a weist Bodenschienenabschnitte 19 auf, die in horizontal umgeklappter Ruheposition der Rückenlehnenanordnung 3a mit den Bodenschienen 19 des Fahrzeugbodens fluchten. Die Rückenlehnenanordnung 3a kann einoder mehrteilig gestaltet ist. Der Fahrzeugboden kann entweder derart ausgeführt sein, dass er lediglich eine Vertiefung für die Aufnahme einer einzelnen Rückenlehnenanordnung 3a aufweist, oder auch derart, dass in Fahrzeuglängsrichtung verteilt mehrere muldenartige Vertiefungen in Abstand zueinander im Fahrzeugboden angeordnet sind. Dementsprechend sind dann auch mehrere Sitzanordnungen vorgesehen. Hierdurch ist ein variables Raumkonzept zu dem Fahrzeuginnenraum erzielbar, indem mehrere Sitzreihen entfernt oder - je nach Bedarf - hinzugefügt werden können. In horizontal umgeklappter Ruheposition schließen die Rückseiten der Rückenlehnen im wesentlichen bündig mit der übrigen Horizontalfläche des Fahrzeugbodens 2c ab, so dass sich ein entsprechend vergrößerter Frei- oder Laderaum ergibt. Diese Lösung ist insbesondere für Nutzkraftwagen für den Personentransport, insbesondere für Omnibusse, einsetzbar.

Um auch bei einem derart variablen Raumkonzept eine entsprechende Trennvorrichtung variabel aufbauen zu können, weist die Trennvorrichtung ähnlich dem Ausführungsbeispiel nach den Fig. 1 bis 4 eine formstabile Plattenanordnung 6a auf, in der eine transparente Scheibenanordnung 17a ausziehbar integriert angeordnet ist. Die Plattenanordnung 6a ist rahmen- oder kastenförmig analog der anhand der Fig. 1 bis 4 beschriebenen Plattenanordnung gestaltet, so dass die Scheibenanordnung 17a nach oben aus der Plattenanordnung 6a herausgezogen oder in dieser versenkt werden kann. Die Plattenanordnung 6a erstreckt sich zwischen den gegenüberliegenden Bodenschienen 19 und ist mit Hilfe von kombinierten Schwenk-/Gleitköpfen 23 in entsprechenden Führungsschienenabschnitten 20 der Bodenschienen 19 zum einen in Fahrzeuglängsrichtung linear beweglich und zum anderen um die Schwenkachse der Schwenk-/Gleitköpfe schwenkbeweglich gelagert. Die Plattenanordnung 6 kann in ihrer horizontalen Ruheposition versenkt zwischen den Bodenschienen 19 angeordnet sein (Fig. 5). Die Plattenanordnung 6 kann in ihre aufrechte Schutzposition gemäß Fig. 6 verschwenkt werden, wobei sie dann in den entsprechend ausgesparten Bereich der Rückenlehnenanordnung 3a zwischen den gegenüberliegenden Bodenschienenabschnitten 19 eingreift.

Die Führungsschienenabschnitte 20 der Bodenschienen 19 zur Linearführung und Schwenkführung der Plattenanordnung 6a sind oberhalb der Rückseite der Rückenlehnenanordnung 3a angeordnet, sobald die Rückenlehnenanordnung 3a in ihre horizontale Ruhelage überführt ist. Die Plattenanordnung 6a kann daher in einfacher Weise über die entsprechenden Bodenschienenabschnitte 20 über die Rückenlehnenanordnung 3a hinweggeschoben und an geeigneter Stelle in ihrer aufrechten Schutzposition fixiert werden.

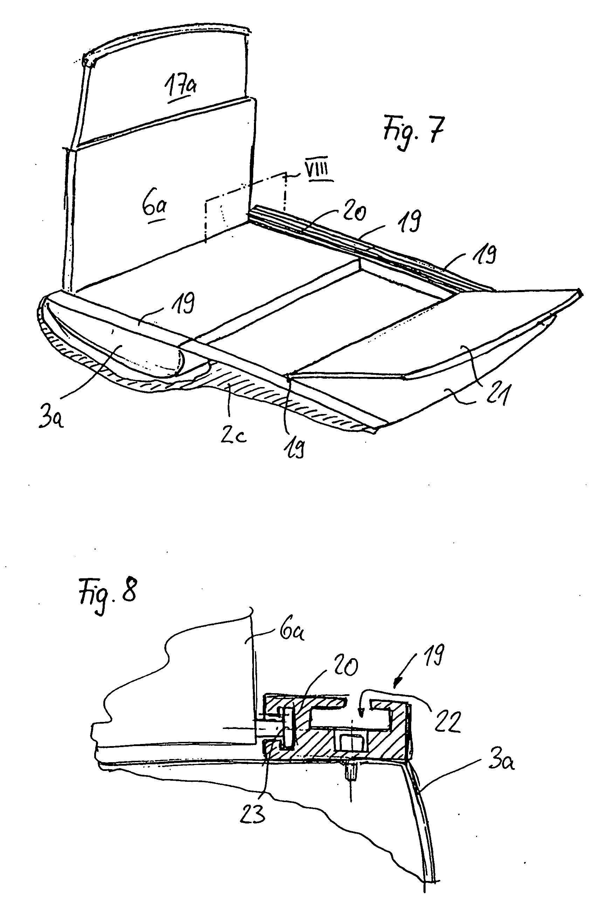

Zwischen den Bodenschienen 19 ist benachbart hinter dem für die Plattenanordnung 6a vorgesehenen Aussparungsbereich eine Deckplattenanordnung 21 vorgesehen, die in der Darstellung gemäß Fig. 6 aus einem gedoppelt liegenden Plattenpaar gebildet ist. In der Dopplungsstellung entspricht die Dicke des Plattenpaares 21 etwa der Dicke der Plattenanordnung 6a. Um die Vertiefung, die gemäß Fig. 6 und 7 durch das Aufrechtstehen der Plattenanordnung 6a entstanden ist, im Fahrzeugboden zu überdecken, kann eine Platte des Plattenpaares 21 in einfacher Weise nach vorne geklappt werden.

Die Bodenschienenabschnitte 19 sind mit der Rückseite der Rückenlehnenanordnung 3a fest verbunden. Zusätzlich zu den Führungsschienenabschnitten 20 weisen die Bodenschienen 19 wie auch die Bodenschienenabschnitte 19 auf Höhe der Rückenlehnenanordnung 3a nach oben offene Führungsnuten auf, in die geeignete Halte- oder Führungselemente einsetzbar und in diesen verschiebbar sind.

## Patentansprüche

1. Fahrzeuginnenraum mit einer Trennvorrichtung mit wenigstens einem formstabilen Flächengebilde, das in einer Schutzposition aufrecht positioniert ist, **dadurch gekennzeichnet, dass** das Flächengebilde (6, 6a) zwischen einer mit einem Fahrzeugboden (2, 2c) bodenbündig angeordneten Abdeckposition und wenigstens einer aufrechten Schutzposition beweglich gelagert ist, und dass das Flächengebilde (6, 6a) über eine Zwangsführungseinrichtung (9 bis 12, 14, 15; 20, 23) relativ zu dem Fahrzeugboden derart beweglich geführt ist, dass das Flächengebilde in wenigstens zwei in Fahrzeuglängsrichtung relativ zueinander beabstandete Schutzpositionen überführbar ist.

2. Fahrzeuginnenraum nach Anspruch 1, **dadurch gekennzeichnet, dass** die Zwangsführungseinrichtung wenigstens eine kombinierte Linearführungs- und Schwenkkinematik (9 bis 12, 14, 15) aufweist, die einerseits fahrzeugseitig und andererseits am Flächengebilde (6) angreift.

3. Fahrzeuginnenraum nach Anspruch 2, **dadurch gekennzeichnet, dass** die Linearführungs- und Schwenkkinematik wenigstens einen Stützarm (9) aufweist, der in wenigstens einer aufrechten Schutzposition des Flächengebildes (6) in eine die Schutzposition sichernde Übertotpunktlage überführbar ist.

4. Fahrzeuginnenraum nach Anspruch 1, **dadurch gekennzeichnet, dass** das formstabile Flächengebilde in seiner Ruheposition einer Vertiefung des Fahrzeugbodens zugeordnet ist, und dass wenigstens ein benachbartes, bodenseitiges Abdeckelement vorgesehen ist, das bei in eine aufgestellte Schutzposition überführtem Flächengebilde in eine die Vertiefung abdeckende Schließposition überführbar ist.

5. Fahrzeuginnenraum nach Anspruch 4, **dadurch gekennzeichnet, dass** das Abdeckelement zwischen einer ein weiteres Abdeckelement überlagernden Dopplungsposition und einer fluchtend horizontal an das Abdeckelement anschließenden Deckposition beweglich gelagert ist.

6. Fahrzeuginnenraum nach Anspruch 5, **dadurch gekennzeichnet, dass** die beiden Abdeckelemente in der Dopplungsposition gemeinsam etwa die Dicke des formstabilen Flächengebildes aufweisen.

7. Fahrzeuginnenraum nach Anspruch 1, **dadurch gekennzeichnet, dass** bodenseitige, in Fahrzeuglängsrichtung verlaufende Führungsschienen (19, 20) vorgesehen sind, in denen das Flächengebilde (6a) verschiebbar und verschwenkbar gelagert ist.

8. Fahrzeuginnenraum nach Anspruch 7, **dadurch gekennzeichnet, dass** in Fahrzeuglängsrichtung gesehen mehrere Vertiefungen in dem Fahrzeugboden für die Aufnahme wenigstens einer zusammenklappbaren Sitzanordnung (3a) vorgesehen sind, und dass das wenigstens eine formstabile Flächengebilde (6a) mittels bodenseitiger Führungsanordnungen (20) in Fahrzeuglängsrichtung über wenigstens eine Vertiefung oder wenigstens eine zusammengeklappte Sitzanordnung hinweg verlagerbar geführt ist.

9. Fahrzeuginnenraum nach einem der vorhergehenden Ansprüche, **dadurch gekennzeichnet, dass** Antriebsmittel vorgesehen sind, um die Bewegung der Zwangsführungseinrichtung zu unterstützen oder zu steuern.

10. Fahrzeuginnenraum nach Anspruch 1, **dadurch gekennzeichnet, dass** die Trennvorrichtung wenigstens ein transparentes Scheibenelement (17, 17a) aufweist, das translatorisch parallel zu dem Flächengebilde (6, 6a) beweglich gelagert ist und das in einer Schutzposition das Flächengebilde (6, 6a) in Fahrzeughochrichtung verlängert.

11. Fahrzeuginnenraum nach Anspruch 10, **dadurch gekennzeichnet, dass** das Flächengebilde (6, 6a) sich in seiner aufrechten Schutzposition von einem Fahrzeugboden (2, 2c) bis etwa auf Höhe einer Fahrzeugbordkante erstreckt, und dass das wenigstens eine Scheibenelement (17, 17a) sich in seiner Schutzposition bis zu einem Fahrzeugdach erstreckt.

12. Fahrzeuginnenraum nach Anspruch 10, **dadurch gekennzeichnet, dass** das Flächengebilde analog einer Teilung einer Rückenlehnenanordnung geteilt gestaltet ist, wobei die wenigstens zwei Teile unabhängig voneinander beweglich angeordnet sind, und dass jedem Teil wenigstens ein Scheibenelement zugeordnet ist.

13. Fahrzeuginnenraum nach Anspruch 10, **dadurch gekennzeichnet, dass** das Flächengebilde als Plattenanordnung (6, 6a) gestaltet ist, in der das wenigstens eine Scheibenelement (17, 17a) linear verschiebbar integriert ist.

14. Fahrzeuginnenraum nach Anspruch 13, **dadurch gekennzeichnet, dass** das wenigstens eine Scheibenelement (17, 17a) in einer Schlitzführung der Plattenanordnung (6, 6a) linear verschiebbar geführt ist, und dass eine in der Funktionsposition nach oben offene Seite der Schlitzführung durch einen beweglichen Deckel (13) verschließbar ist.

## Claims

1. Vehicle interior with a separating device having at least one dimensionally stable flat structure, which is positioned upright in a protection position, **characterized in that** the flat structure (6, 6a) is movably mounted between a covering position flush with a vehicle bottom (2, 2c) and at least one upright protection position and that the flat structure (6, 6a) is so movably guided relative to the vehicle bottom by means of a forced guidance device (9 to 12, 14, 15; 20, 23) that the flat structure can be transferred into at least two protection positions spaced relative to one another in the vehicle longitudinal direction.

2. Vehicle interior according to claim 1, **characterized in that** the forced guidance device has at least one combined linear guidance and swivelling kinematics (9 to 12, 14, 15), which on the one hand act on the vehicle side and on the other on the flat structure (6).

3. Vehicle interior according to claim 2, **characterized in that** the linear guidance and swivelling kinematics have at least one bracket (9), which can be transferred in at least one upright protection position of the flat structure (6) into an over dead centre position securing the protection position.

4. Vehicle interior according to claim 1, **characterized in that**, in its rest position, the dimensionally stable flat structure is associated with a depression of the vehicle bottom and that at least one adjacent, bottom-side covering element is provided which, when the surface structure is transferred into an upright protection position, can be transferred into a closing position covering the depression.

5. Vehicle interior according to claim 4, **characterized in that** the covering element is movably mounted between a doubling position superimposing a further covering element and an aligned, horizontal cover position connected to covering element.

6. Vehicle interior according to claim 5, **characterized in that**, in the doubling position, together the two covering elements have roughly the same thickness as the dimensionally stable flat structure.

7. Vehicle interior according to claim 1, **characterized in that** on the bottom side there are guide rails (19, 20) running in the vehicle longitudinal direction and in which the flat structure (6a) is displaceably and swivellably mounted.

8. Vehicle interior according to claim 7, **characterized in that**, considered in the vehicle longitudinal direction, there are several depressions in the vehicle bottom for receiving at least one foldable seat arrangement (3a) and that the at least one dimensionally stable flat structure (6a) is displaceably guided in the vehicle longitudinal direction by means of bottom-side guide arrangements (20) beyond at least one depression or at least one folded seat arrangement.

9. Vehicle interior according to one of the preceding claims, **characterized in that** drive means are provided in order to assist or control the movement of the forced guidance device.

10. Vehicle interior according to claim 1, **characterized in that** the separating device has at least one transparent disk element (17, 17a), which is mounted in translatory, movable manner parallel to the flat structure (6, 6a) and which, in a protection position, extends the flat structure (6, 6a) in the vehicle height direction.

11. Vehicle interior according to claim 10, **characterized in that**, in its upright protection position, the flat structure (6, 6a) extends from a vehicle bottom (2, 2c) to roughly level with a vehicle flange edge and that the at least one disk element (17, 7a) in the protection position extends up to a vehicle roof.

12. Vehicle interior according to claim 10, **characterized in that** the flat structure is split in the same way as the division of a back rest arrangement and the at least two parts are movable independently of one another, and that at least one disk element is associated with each part.

13. Vehicle interior according to claim 10, **characterized in that** the flat structure is constructed as a plate arrangement (6, 6a), in which is integrated in linearly displaceable manner at least one disk element (17, 17a).

14. Vehicle interior according to claim 13, **characterized in that** the at least one disk element (17, 17a) is linearly displaceably guided in a slot guide of the plate arrangement (6, 6a) and that a side of the slot guide open at the top in the operating position can be closed by a movable cover (13).

## Revendications

1. Habitacle de véhicule avec un dispositif de cloisonnement présentant au moins une structure plane indéformable qui se trouve à la verticale en position de protection, **caractérisé en ce que** la structure plane (6, 6a) est montée de manière à pouvoir être déplacée entre une position de recouvrement disposée contre le plancher du véhicule (2, 2c) et au moins une position de protection à la verticale, et que la structure plane (6, 6a) peut, par l'intermédiaire d'un dispositif de guidage forcé (9 à 12, 14, 15 ; 20, 23), être déplacée de telle manière par rapport au plancher du véhicule que la structure plane peut être mise dans au moins deux positions de protection à distance l'une de l'autre dans le sens longitudinal du véhicule.

2. Habitacle de véhicule selon la revendication 1, **caractérisé en ce que** le dispositif de guidage forcé présente au moins un mécanisme de guidage linéaire et de pivotement (9 à 12, 14, 15) combiné qui s'engage d'un côté dans le véhicule et, d'un autre côté, dans la structure plane (6).

3. Habitacle de véhicule selon la revendication 2, **caractérisé en ce que** le mécanisme de guidage linéaire et de pivotement présente au moins un bras d'appui (9) pouvant, dans au moins une position de protection verticale de la structure plane (6), être amené dans une position de dépassement du point mort sécurisant la position de protection.

4. Habitacle de véhicule selon la revendication 1, **caractérisé en ce que** la structure plane indéformable est, dans sa position de repos, associée à un renfoncement du plancher du véhicule, et qu'est prévu à proximité au moins un élément de recouvrement du côté du plancher qui peut être amené dans une position de fermeture de manière à recouvrir le renfoncement lorsque la structure plane est amenée dans une position de protection verticale.

5. Habitacle de véhicule selon la revendication 4, **caractérisé en ce que** l'élément de recouvrement peut être déplacé entre une position de doublage superposant un autre élément de recouvrement et une position de couvrement prolongeant à l'horizontale et par alignement l'élément de recouvrement.

6. Habitacle de véhicule selon la revendication 5, **caractérisé en ce que** les deux éléments de recouvrement réunis, dans la position de doublage, présentent approximativement l'épaisseur de la structure plane indéformable.

7. Habitacle de véhicule selon la revendication 1, **caractérisé en ce que** sont prévus, du côté du plancher, des rails de guidage (19, 20) s'étendant dans le sens longitudinal du véhicule dans lesquels la structure plane (6a) est montée de manière à pouvoir être déplacée et pivotée.

8. Habitacle de véhicule selon la revendication 7, **caractérisé en ce que**, vu dans le sens longitudinal du véhicule, sont prévus, dans le plancher du véhicule, plusieurs renfoncements destinés à loger au moins un agencement de sièges (3a) rabattable, et que la structure plane indéformable (6a) au moins en présence est guidée de manière mobile dans le sens longitudinal du véhicule au moyen de dispositifs de guidage (20) situés du côté du plancher, au-delà d'au moins un renfoncement ou d'au moins un agencement de sièges rabattable.

9. Habitacle de véhicule selon l'une des revendications précédentes, **caractérisé en ce que** sont prévus des éléments d'entraînement pour assister ou commander le mouvement du dispositif de guidage forcé.

10. Habitacle de véhicule selon la revendication 1, **caractérisé en ce que** le dispositif de cloisonnement présente au moins un panneau transparent (17, 17a) qui est logé de manière à pouvoir se déplacer de façon translatoire et parallèlement à la structure plane (6, 6a) et qui, dans une position de protection, prolonge la structure plane (6, 6a) dans le sens de la hauteur du véhicule.

11. Habitacle de véhicule selon la revendication 10, **caractérisé en ce que** la structure plane (6, 6a) s'étend, dans sa position de protection verticale, du plancher du véhicule (2, 2c) jusqu'à approximativement la hauteur d'une arête de bordure du véhicule, et que le panneau (17, 17a) au moins en présence s'étend, dans sa position de protection, jusqu'au toit du véhicule.

12. Habitacle de véhicule selon la revendication 10, **caractérisé en ce que** la structure plane est divisée de façon analogue à une division d'un agencement de sièges, sachant que les deux parties au moins en présence sont disposées de manière à pouvoir être déplacées indépendamment l'une de l'autre, et que chacune des parties est dotée d'au moins un panneau.

13. Habitacle de véhicule selon la revendication 10, **caractérisé en ce que** la structure plane est conçue sous forme de dispositif de plaques (6, 6a) dans lequel le panneau (17, 17a) au moins en présence est intégré de manière à pouvoir être déplacé linéairement.

14. Habitacle de véhicule selon la revendication 13, **caractérisé en ce que** le panneau (17, 17a) au moins en présence est conduit par déplacement linéaire dans un guidage à rainure du dispositif de plaques (6, 6a), et que le côté du guidage à rainure ouvert vers le haut en position fonctionnelle peut être fermé par un couvercle mobile (13).
